# EUROPEAN PATENT APPLICATION

(11) **EP 4 223 823 A1**
(43) Date of publication of application: **09.08.2023**
(21) Application number: 22154902.5
(22) Date of filing: 03.02.2022
(51) Int. Cl.: C08G 18/32, C07C 263/00, C07C 273/00, C08G 18/64, C08G 18/71, C09D 163/00, C08G 18/28, C08G 18/73, C08G 18/78, C08G 18/24

(54) **NOVEL POLYURETHANES HAVING PENDANT EPOXY GROUPS AND THERMOSETS THEREOF**

(71) Applicant: Covestro LLC, Pittsburgh, PA 15205 (US)
(72) Inventor: The designation of the inventor has not yet been filed
(74) Representative: Levpat

(57) **Abstract**

Provided is a polyurethane with pendant epoxy groups according to formula (I): 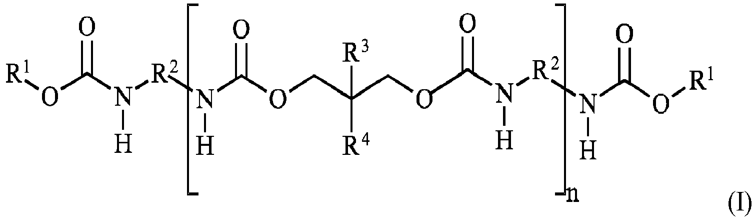 wherein, R¹ is a linear or branched alkyl group, an allyl group, a glycidyl group, an aromatic group, a cycloaliphatic group, an alkyl-aromatic group, or mixtures thereof, R² is a linear aliphatic, a cycloaliphatic, an aromatic, or an alkyl aromatic group, R³ is a hydrogen, a methyl, an ethyl, or other higher alkyl, an allyl oxy, a glycidyl oxy, an allyl oxy methyl, or a glycidyl oxy methyl group, and R⁴ is an allyl oxy, a glycidyl oxy, an allyl oxy methyl, or a glycidyl oxy methyl group. The invention further provides a process for producing these polyurethanes with pendant epoxy groups, the process comprising (1) reacting a diisocyanate with a compound containing one or more allyl groups and two hydroxyl groups, to form a linear polyurethane having pendant allyl-functional groups, and (2) oxidizing the allyl groups to produce the polyurethane with pendant epoxy groups. The polyurethanes of the present invention may be included in coatings, adhesives, sealants, films, elastomers, castings, foams, and composites.

## Description

### FIELD OF THE INVENTION

The present invention relates in general to polymers, and more specifically, to polyurethanes having pendant epoxy groups and thermosets thereof.

### BACKGROUND OF THE INVENTION

High performance paint and coating systems are needed for many applications ranging from aircraft, ships, chemical plants, flooring, bridges, and many others. Although there are many coatings binder systems available, the two most prominent are epoxy coatings and polyurethane coatings.

Epoxy resin systems are often used as primers as they provide good adhesion to most substrates and provide a barrier for anticorrosion. A typical epoxy system involves a bisphenol-A (BPA) based epoxy resin that is cured with a multifunctional amine curing agent. Typically, liquid BPA epoxy resins are used such as EPON 828 from Hexion or DER 331 from Olin Chemicals. Amine curing agents can be simple compounds such as bis(p-amino cyclohexyl) methane (PACM), isophorone diamine (IPDA) or more complex amine compounds such as polyamide resins, polyamidoamine resins, polyphenalkamine resins, or epoxy resin adducts. Because the reactions between the amine curing agent and the epoxy resin start as soon as the two ingredients are mixed, these materials are provided separately as two-component systems (2K) which are mixed just prior to their application. The time after mixing the components during which the coating can still be applied is known as the "pot life". Sometimes the pot life is defined as the time for the viscosity to double; however, the pot life for any given coating system is that time where the viscosity is suitable for application. More information about epoxy resin technology can be found in various reference materials including B. Ellis, ed., Chemistry and Technology of Epoxy Resins, Springer Science, 1993; H. Panda, Epoxy Resins Technology Handbook, 2nd Revised Edition, Asia Pacific Business Press, 2019; C. May, Epoxy Resins: Chemistry and Technology, 2nd Edition, Routledge, 2018.

In addition to amines, epoxy resins also react with themselves (homopolymerization), anhydrides, phenols, and/or thiols. An epoxy formulation may contain multiple different kinds of curing agents as well as the right conditions for homopolymerization.

Polyurethane coatings represent a class of high-performance systems that can be used for a number of different applications. Polyurethanes are highly desired for their durability, toughness, and abrasion resistance, which is believed to be a result of extensive hydrogen bonding. Two component (2K) polyurethane coatings involve the reaction of a polyol with a polyisocyanate. As with epoxy resins, the curing reactions start as soon as the components are mixed; therefore, the coating system is supplied in two packages that are mixed just prior to application. The polyol can be an acrylic polyol, a polyester polyol, a polyether polyol, a polyurethane polyol, or a polycarbonate polyol. The polyisocyanate component can be based on aromatic or aliphatic building blocks. Aromatic polyisocyanates react very rapidly, although aliphatic polyisocyanates react slower; however, it is possible to accelerate the curing with the use of catalysts. Aliphatic polyisocyanates are preferred for use where the coating requires weathering performance. More information about polyurethanes and their use in coatings can be found in various reference materials including Szycher's Handbook of Polyurethanes, 2nd edition, CRC Press, 2012; U. Meier-Westhues, Polyurethanes: Coatings, Adhesives and Sealants, Vincentz Network, 2007.

However, due to concerns about worker exposure to isocyanates, there is a desire to be able to make polyurethanes without using isocyanates at the point of application. A number of approaches have been explored including cyclic carbonate-amine chemistry and carbamate-aldehyde chemistry, among others [Polymer Bulletin 2019, 76 (6), 3233-3246; ChemSusChem 2019, 12 (15), 3410-3430; European Polymer Journal 2017, 87, 535-552; RSC Advances 2013, 3 (13), 4110-4129; Polymers for Advanced Technologies 2015, 26 (7), 707-761].

In making new coatings systems, it is desirable to maintain the polyurethane character because the hydrogen bonding it affords imparts significant toughness, durability, and abrasion resistance. Therefore, a system that results in crosslinked polyurethane materials, but uses a different crosslinking chemistry is desirable.

As described previously, epoxy chemistry is well known and used extensively in the field of thermosetting materials for applications in coatings, composites, and adhesives. Having an epoxy-functional polyurethane can meet this need.

One approach to making epoxy-functional polyurethanes is that of glycidyl carbamate-functional resins. Glycidyl carbamate-functional resins are made by reacting isocyanate-functional resins with glycidol.

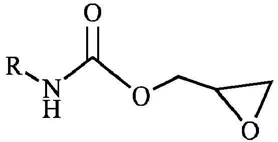

Glycidyl carbamates are typically synthesized by the reaction of a polyisocyanate with glycidol. In U.S. Pat. No. 2,830,038, Pattison disclosed the synthesis of linear epoxy urethane compounds by the reaction of polytetramethylene ether glycol with an excess of toluene-2,4-diisocyanate (TDI), followed by reaction with glycidol. The product is mixed with a diamine and cured to form an elastomer.

Doss, in U.S. Pat. No. 3,440,230, disclosed the synthesis of a glycidyl carbamate resin by the reaction of a mixture of 2,4- and 2,6-toluene diisocyanate (TDI) with glycidol. The product could be cured at elevated temperature (180 °C for 30 minutes) between aluminum strips and formed an adhesive. Pittman et al. disclosed glycidol modified polyurethanes as treatments for textiles in U.S. Pat. No. 3,814,578. To prepare the glycidol-modified polyurethane, an isocyanate terminated prepolymer was reacted with glycidol. The product is applied to a fabric either from solvent or as an aqueous emulsion and cured.

Several researchers have studied the rearrangement reactions of glycidyl carbamates. In an early report, Iwakura and Taneda indicated that N-substituted phenyl glycidyl carbamate would rearrange at elevated temperatures to 3-phenyl-5-hydroxytetrahydro-1,3-oxazin-2-one (J. Org. Chem, 24, 1992 (1959)). However, Farrisey and Nashu showed that, when catalyzed by a tertiary amine, phenyl glycidyl carbamate rearranges at elevated temperatures to 3-phenyl-4-hydroxymethyl-2-oxazolidones [J. Heterocyl. Chem., 7, 331-333 (1970)].

The group of Chen et al. reported the synthesis of glycidol-terminated polyurethanes (glycidyl carbamates) and found that they had good adhesion at low temperatures as well as good storage stability and room temperature curing (J. Appl. Polym. Sci., 51, 1199-1206 (1994)). A subsequent study showed that the glycidol-terminated polyurethanes had better impact strength, fracture energy, and adhesion than a conventional epoxy resin (J. Appl. Polym. Sci., 52, 1137-1151 (1994)). In EP 0553701 A2, Rehfuss, et al. reported a coating system made from reacting a polyisocyanate with glycidol to form the glycidyl carbamate resin and then curing it with a polyfunctional acid compound. Yeganeh et al. synthesized biodegradable epoxy terminated polyurethanes by end-capping of isocyanate terminated prepolymers with glycidol which were then cured with diamines to make thermosets (Eur. Polym. J. 41, 2370-2379 (2005); J. Polym. Sci. A Polym. Chem. 43, 2985-2006 (2005)). Yeganeh et al. also studied polyurethane elastomers made from isocyanate terminated prepolymers capped with glycidol that were then cured with a polyamic acid to form crosslinked elastomers (J. Appl. Polym. Sci. 103, 1776-1785 (2007)). Yeganeh et al. also studied the curing of epoxy polyurethanes using a novel phenolic functionalized polyamide resin (High Perf. Polym. 20, 126-145 (2008)). Solouck et al. synthesized isocyanate terminated prepolymers from difunctional polyols and diisocyanates that were then end-capped with glycidol. These were then cured with diamines to form crosslinked elastomers (Iran. J. Pharma. Sci., 4, 281-288 (2008)). Sun et al. studied the kinetics of the reaction of glycidol with isocyanate terminated prepolymers from aromatic and cycloaliphatic diisocyanates. The epoxy urethane terminated polymers were mixed with conventional BPA epoxy resins and cured and their underwater acoustic properties were studied (Polym. Bull. 69, 621-633 (2012)).

In a series of investigations, Webster et al. studied the synthesis of glycidyl carbamate-functional resins made from the reaction of glycidol with multifunctional polyisocyanates derived from 1,6-hexamethylene diisocyanate (HDI). In one paper, the synthesis of multifunctional resins and their curing with amines to form coatings was studied (JCT Research, 2, 517-528 (2005)). In another paper the self-crosslinking reaction at elevated temperature was studied as were the properties of coatings cured with the self-crosslinking reaction (Prog. Org. Coat., 57, 128-139(2006)). It was also shown that modification of the polyisocyanates with monofunctional alcohols, followed by reaction with glycidol could be used to moderate the viscosity of the resins. The results could be cured with amines or through self-crosslinking to form coatings (J. Coat. Tech. & Res., 7, 531-546 (2010); U.S. Pat. Nos. 9,051,413; and 9,593,258). Webster et al., also demonstrate in U.S. Pat. No. 8,852,458 that polyfunctional glycidyl carbamate resins could be blended with conventional BPA epoxy resins to form corrosion resistant coatings. Glycidyl carbamate-functional resins could be rendered water dispersible by partial replacement of glycidol with polyethylene glycol and cured using waterborne amine curing agents (J. Coat. Tech. Res., 6, 735-747 (2011); U.S. Pat. Nos. 7,776,956; and 9,676,895). To make highly flexible coatings linear glycidyl carbamate resins can be made and cured with amines (J. Coat. Tech. Res., 10(2), 141-151 (2012)). Hybrid sol-gel systems can also be synthesized by reactions with various silanes (Prog. Org. Coat., 66(1), 73-85 (2009); Prog. Org. Coat., 64(2-3) 128-137 (2009); Prog. Org. Coat., 63(4) 405-415 (2008); and U.S. Pat. No. 8,097,741).

All these glycidyl carbamate resins are synthesized by reacting an isocyanate-functional material with glycidol. However, glycidol is very expensive and has various health hazards associated with it.

In another approach to the synthesis of epoxy-functional polyurethane resins, Ambrose et al., reported the reaction of isocyanate-functional compounds with a hydroxyl-functional polyepoxide having 2 or more epoxy groups per molecule (U.S. Pat. Nos. 4,699,814; and 4,749,743). An example of a hydroxyl-functional polyepoxide is a diglycerol polyglycidyl ether having three epoxy groups per molecule.

To reduce or eliminate problems; therefore, a need exists in the art for polyurethanes having pendant epoxy groups and processes for their production.

### SUMMARY OF THE INVENTION

Accordingly, the present invention provides polyurethanes with pendant epoxy groups of formula (I): 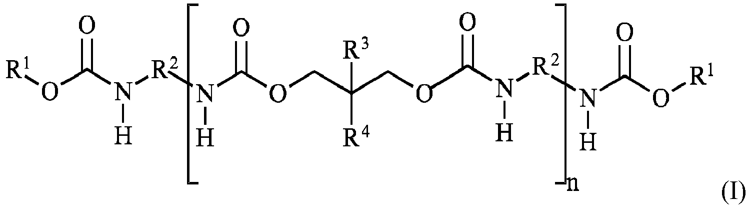 wherein, R¹ is a linear or branched alkyl group, an allyl group, a glycidyl group, an aromatic group, a cycloaliphatic group, an alkyl-aromatic group, or mixtures thereof, R² is a linear aliphatic, a cycloaliphatic, an aromatic, or an alkyl aromatic group, R³ is a hydrogen, a methyl, an ethyl, or other higher alkyl, an allyl oxy, a glycidyl oxy, an allyl oxy methyl, or a glycidyl oxy methyl group, and R⁴ is an allyl oxy, a glycidyl oxy, an allyl oxy methyl, or a glycidyl oxy methyl group.

The invention further provides a process for producing the inventive polyurethanes with pendant epoxy groups, the process comprising (1) reacting a diisocyanate compound with a compound containing one or more allyl groups and two hydroxyl groups, to form a linear polyurethane having pendant allyl-functional groups; and (2) oxidizing the allyl groups to produce the polyurethane with pendant epoxy groups.

The inventive polyurethanes may find use in coatings, adhesives, sealants, films, elastomers, castings, foams, and composites.

These and other advantages and benefits of the present invention will be apparent from the Detailed Description of the Invention herein below.

### BRIEF DESCRIPTION OF THE FIGURES

The present invention will now be described for purposes of illustration and not limitation in conjunction with the figures, wherein:
FIG. 1 illustrates the synthetic route to linear polyurethane epoxy resins;
FIG. 2 is the ¹³C NMR spectra of linear polymers P1 and P4;
FIG. 3 is the ATR-FTIR spectra of linear polymers P1 and P4;
FIG. 4 is the ¹³C NMR spectra of linear polymers P2 and P5;
FIG. 5 is the ATR-FTIR spectra of linear polymers P2 and P5;
FIG. 6 is the ¹³C NMR spectra of linear polymers P3 and P6; and
FIG. 7 is the ATR-FTIR spectra of linear polymers P3 and P6.

### DETAILED DESCRIPTION OF THE INVENTION

The present invention will now be described for purposes of illustration and not limitation. Except in the operating examples, or where otherwise indicated, all numbers expressing quantities, percentages, and so forth in the specification are to be understood as being modified in all instances by the term "about."

Any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. §112(a), and 35 U.S.C. §132(a). The various embodiments disclosed and described in this specification can comprise, consist of, or consist essentially of the features and characteristics as variously described herein.

Any patent, publication, or other disclosure material identified herein is incorporated by reference into this specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant reserves the right to amend this specification to expressly recite any subject matter, or portion thereof, incorporated by reference herein.

Reference throughout this specification to "various non-limiting embodiments," "certain embodiments," or the like, means that a particular feature or characteristic may be included in an embodiment. Thus, use of the phrase "in various non-limiting embodiments," "in certain embodiments," or the like, in this specification does not necessarily refer to a common embodiment, and may refer to different embodiments. Further, the particular features or characteristics may be combined in any suitable manner in one or more embodiments. Thus, the particular features or characteristics illustrated or described in connection with various or certain embodiments may be combined, in whole or in part, with the features or characteristics of one or more other embodiments without limitation. Such modifications and variations are intended to be included within the scope of the present specification.

The grammatical articles "a", "an", and "the", as used herein, are intended to include "at least one" or "one or more", unless otherwise indicated, even if "at least one" or "one or more" is expressly used in certain instances. Thus, these articles are used in this specification to refer to one or more than one (i.e., to "at least one") of the grammatical objects of the article. By way of example, and without limitation, "a component" means one or more components, and thus, possibly, more than one component is contemplated and may be employed or used in an implementation of the described embodiments. Further, the use of a singular noun includes the plural, and the use of a plural noun includes the singular, unless the context of the usage requires otherwise.

In a first aspect, the present invention is directed to a polyurethane with pendant epoxy groups of formula (I): 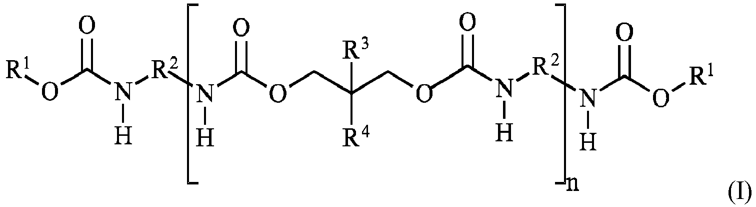 wherein, R¹ is a linear or branched alkyl group, an allyl group, a glycidyl group, an aromatic group, a cycloaliphatic group, an alkyl-aromatic group, or mixtures thereof, R² is a linear aliphatic, a cycloaliphatic, an aromatic, or an alkyl aromatic group, R³ is a hydrogen, a methyl, an ethyl, or other higher alkyl, an allyl oxy, a glycidyl oxy, an allyl oxy methyl, or a glycidyl oxy methyl group, and R⁴ is an allyl oxy, a glycidyl oxy, an allyl oxy methyl, or a glycidyl oxy methyl group.

In a second aspect, the present invention is directed to a process for producing the polyurethane according to the previous paragraph, the process comprising (1) reacting a diisocyanate with a compound containing one or more allyl groups and two hydroxyl groups, to form a linear polyurethane having pendant allyl-functional groups; and (2) oxidizing the allyl groups to produce the polyurethane with pendant epoxy groups.

In a third aspect, the present invention is directed to one of a coating, an adhesive, a sealant, a film, an elastomer, a casting, a foam, and a composite comprising the polyurethane according to the previous two aspects.

The present inventors have unexpectedly discovered an entirely new approach to the synthesis of epoxy-functional polyurethanes that does not make use of glycidol, where an epoxy group is pendant to the polyurethane backbone and, optionally, at the end of the linear polyurethane chain.

The synthesis method involves a first reaction of a diisocyanate with a compound containing one or more allyl groups and two hydroxyl groups. A monofunctional alcohol is also used to end cap the polyurethane. Then, in a second step, the allyl groups are oxidized to covert the double bonds to epoxy groups.

There are a number of approaches for converting terminal double bonds into epoxy groups. One of the more common approaches is to use m-chloroperbenzoic acid which reacts directly with a carbon-carbon double bond to convert it to the corresponding epoxide (J. Am. Chem. Soc., 120, 9513-9516 (1998)). However, the by-product of the reaction is m-chlorobenzoic acid in stoichiometric amounts, which creates significant waste.

An alternative method for epoxidizing olefins involves dioxirane, which can be generated in situ from the reaction of a ketone with potassium peroxymonosulfate, also known as potassium caroate or oxone (J. Org. Chem. 45, 4758-4760 (1980)). This method has been found to be useful in epoxidizing a number of different types of carbon-carbon double bonds (Org. Process Res. Dev, 6, 405-406 (2002), ACS Sustain. Chem. Eng., 6, 5115-5121 (2018)).

Thus, the present inventors have discovered that polyurethanes having pendant epoxy groups can be synthesized by reacting a diisocyanate with a compound containing one or more allyl groups and two hydroxyl groups. A monofunctional alcohol is also used to end cap the polyurethane. The allyl groups are then oxidized to form epoxy groups. The resulting epoxy-functional urethane compounds can be cured into thermosetting coatings by reaction.

As used herein, the term "polymer" encompasses prepolymers, oligomers, and both homopolymers and copolymers; the prefix "poly" in this context refers to two or more. As used herein, the term "molecular weight", when used in reference to a polymer, refers to the number average molecular weight, unless otherwise specified.

As used herein, the term "polyol" refers to compounds comprising at least two free hydroxyl groups. Polyols include polymers comprising pendant and terminal hydroxyl groups.

As used herein, the term "coating composition" refers to a mixture of chemical components that will cure and form a coating when applied to a substrate.

The terms "adhesive" or "adhesive composition" refer to any substance that can adhere or bond two items together. Implicit in the definition of an "adhesive composition" or "adhesive formulation" is the concept that the composition or formulation is a combination or mixture of more than one species, component or compound, which can include adhesive monomers, oligomers, and polymers along with other materials.

A "sealant" or "sealant composition" refers to a composition which may be applied to one or more surfaces to form a protective barrier, for example to prevent ingress or egress of solid, liquid or gaseous material or alternatively to allow selective permeability through the barrier to gas and liquid. In particular, it may provide a seal between surfaces.

A "casting" or "casting composition" refers to a mixture of liquid chemical components which is usually poured into a mold containing a hollow cavity of the desired shape, and then allowed to solidify.

A "composite" or "composite composition" refers to a material made from one or more polymers, containing at least one other type of material (e.g., a fiber) which retains its identity while contributing desirable properties to the composite. A composite has different properties from those of the individual polymers/materials which make it up.

The terms "cured," "cured composition" or "cured compound" refer to components and mixtures obtained from reactive curable original compound(s) or mixture(s) thereof which have undergone chemical and/or physical changes such that the original compound(s) or mixture(s) is(are) transformed into a solid, substantially non-flowing material. A typical curing process may involve crosslinking.

The term "curable" means that an original compound(s) or composition material(s) can be transformed into a solid, substantially non-flowing material by means of chemical reaction, crosslinking, radiation crosslinking, or the like. Thus, compositions of the invention are curable, but unless otherwise specified, the original compound(s) or composition material(s) is(are) not cured.

The components useful in the present invention comprise a polyisocyanate. As used herein, the term "polyisocyanate" refers to compounds comprising at least two unreacted isocyanate groups, such as three or more unreacted isocyanate groups. The polyisocyanate may comprise diisocyanates such as linear aliphatic polyisocyanates, aromatic polyisocyanates, cycloaliphatic polyisocyanates and aralkyl polyisocyanates.

Suitable polyisocyanates include aromatic, araliphatic, aliphatic or cycloaliphatic di- and/or polyisocyanates and mixtures thereof. In certain aspects, the polyisocyanate may comprise a diisocyanates of the formula

R(NCO)₂

wherein R represents an aliphatic hydrocarbon residue having 4 to 12 carbon atoms, a cycloaliphatic hydrocarbon residue having 6 to 15 carbon atoms, an aromatic hydrocarbon residue having 6 to 15 carbon atoms or an araliphatic hydrocarbon residue having 7 to 15 carbon atoms.

Examples of organic diisocyanates which are particularly suitable for the present invention include 1,4-tetramethylene diisocyanate, 1,6-hexamethylene diisocyanate (HDI), 2,2,4-trimethyl-1,6-hexamethylene diisocyanate, 2,4,4-trimethyl-1,6-hexamethylene diisocyanate,1,12-dodecamethylene diisocyanate, cyclohexane-1,3- and 1,4-diisocyanate, 1-isocyanato-2-isocyanato-methyl cyclopentane, 1-isocyanato-3,3,5-trimethyl-5-isocyanatomethylcyclohexane (IPDI), bis-(4-isocyanatocyclohexyl)methane (H₁₂MDI), 1,3- and 1,4-bis(isocyanatomethyl)-cyclohexane, bis-(4-isocyanato-3-methyl-cyclohexyl)-methane, α,α,α',α'-tetramethyl-1,3- and 1,4-xylene diisocyanate, 1-isocyanato-1-methyl-4(3)-isocyanato-methyl cyclohexane, and 2,4- and 2,6-hexahydrotoluene diisocyanate, toluene diisocyanate (TDI), diphenylmethane diisocyanate (MDI), pentane diisocyanate (PDI) - bio-based), and, isomers of any of these; or combinations of any of these. Mixtures of diisocyanates may also be used. Preferred diisocyanates include 1,6-hexamethylene diisocyanate (HDI), isophorone diisocyanate (IPDI), and bis(4-isocyanatocyclohexyl)-methane (H₁₂MDI) because they are readily available and yield relatively low viscosity oligomers.

Polyisocyanate adducts containing isocyanurate, iminooxadiazine dione, urethane, biuret, allophanate, uretdione and/or carbodiimide groups are also suitable for use in the present invention, and may be prepared from the same organic groups, R, described above. Such polyisocyanates may have isocyanate functionalities of two to three or more and can be prepared, for example, by the trimerization or oligomerization of diisocyanates or by the reaction of diisocyanates with polyfunctional compounds containing hydroxyl or amine groups. In certain embodiments, the polyisocyanate is the isocyanurate of hexamethylene diisocyanate, which may be prepared in accordance with U.S. Pat. No. 4,324,879, at col. 3, line 5 to col. 6, line 47.

To synthesize the compositions of the invention, in a first step, a diisocyanate compound is reacted with a compound containing one or more allyl groups and two hydroxyl groups along with a monofunctional alcohol to form a polyurethane having pendant allyl groups.

Although any isocyanate compound can be used, it is preferred to diisocyanate compounds. Example diisocyanate compounds include 1,6-hexamethylene diisocyanate, 2,4-toluene diisocyanate, 2,6-toluene diisocyanate and mixtures thereof, methylene diphenyl diisocyanate, isophorone diisocyanate, bis(4-isocyanatocyclohexyl) methane, tetramethylxylene diisocyanate, xylylene diisocyanate, hydrogenated xylylene diisocyanate, 2,2,4 and 2,4,4- trimethyl-1,6-hexamethylene diisocyanate, and 4-isocyanatomethyl-1,8-octane diisocyanate.

Examples of compounds having one or more allyl groups and two hydroxyl groups are trimethylolpropane monoallyl ether, trimethylolethane monoallyl ether, glycerol monoallyl ether, pentaerythritol diallyl ether and the like.

Examples of monofunctional alcohols include alkyl alcohols such as methanol, n-propanol, iso-propanol, n-butanol, iso-butanol, sec-butanol, t-butanol, n-pentanol, 2-ethyl hexanol, amyl alcohol, and the like; ether alcohols such as ethylene glycol methyl ether, ethylene glycol propyl ether, ethylene glycol butyl ether, and the like; cycloaliphatic alcohols such as cyclohexanol; aromatic alcohols such as phenol; aromatic aliphatic alcohols such as benzyl alcohol; allyl alcohol, trimethylolpropane diallyl ether, glycidol and the like.

Mixtures of alcohols, diisocyanates, and the compounds having one or more allyl groups and two hydroxyl groups may also be used.

The ratios of the diisocyanate, compound having one or more allyl groups and two hydroxyl groups and the monofunctional alcohol are adjusted such that the average value of n is 1 or greater.

The first step can be carried out in the absence or presence of solvent and in the absence of presence of a catalyst. Possible solvents are toluene, xylenes, n-butyl acetate, t-butyl acetate, amyl acetate, acetone, methyl ethyl ketone, methyl amyl ketone, dihydrolevoglucosenone (CYRENE), N-methyl 2-pyrrolidone, N-ethyl-2-pyrrolidone, tetrahydrofuran, diethyl ether, dimethylsulfoxide, dimethyl formamide, and dimethylacetamide. It is preferred to carry out the reaction in the absence of solvent, or, if solvent is needed due to viscosity, to use a solvent that can be readily removed after the reaction is complete.

Catalysts for the reaction can include tin compounds such as dibutyl tin dilaurate, dibutyl tin diacetate, tertiary amines such as 1,4-diazabicyclo[2.2.2]octane (DABCO) and other metal salts based on bismuth, iron, zirconium, or zinc. It is preferred to carry out the reaction without a catalyst or with a tin-based catalyst.

After reacting the isocyanate, step two, involving oxidation of the double bond to an epoxide is carried out. The reaction is carried out in a two-phase (biphasic) system. The polyurethane synthesized in step one is dissolved in a solvent. Preferably the solvent is a ketone so that it can function as the source of ketone for the formation of the dioxirane. Solvents such as acetone, methyl ethyl ketone, methyl amyl ketone, and cyclohexanone can be used, with acetone being the preferred solvent. A mixture of a ketone and another solvent may also be used. Suitable solvents are those listed above for the isocyanate-allyl alcohol reaction.

A base is needed in the aqueous phase to maintain basic conditions to stabilize the dimethyldioxirane. Inorganic bases such as sodium hydrogen carbonate (sodium bicarbonate), sodium hydroxide, sodium carbonate, potassium bicarbonate, potassium carbonate, potassium hydroxide, and the like can be used. Sodium bicarbonate is preferred.

The biphasic reaction mixture is stirred vigorously to create interfacial surface area between the organic and aqueous phases. Oxone is dissolved in water and added slowly to the reaction mixture. A slow addition rate is preferred to yield the highest conversion of allyl groups to glycidyl groups. The reaction can be carried out at temperatures ranging from 2 °C to 90 °C. Ambient temperature of 18 °C to 25 °C is preferred.

Optionally, a phase transfer catalyst can be used. Suitable phase transfer catalysts include tetrabutyl ammonium hydrogen sulfate, quaternary ammonium compounds such as benzyl triethyl ammonium chloride, and the like. Ionic liquids can also function as phase transfer compounds such as 1-dodecyl-3-methylimidazolium tetrafluoroborate (DoDMIImBF₄). Crown ethers such as 18-crown-6 can also be used as a phase transfer catalyst.

After completion of the reaction, an organic solvent is added to extract the product from the reaction mixture and the organic and aqueous layers are allowed to separate. The organic layer is then washed several times with aqueous sodium chloride and then the organic layer is separated from the aqueous layer and the solvent removed by evaporation to yield the glycidyl carbamate resin.

Formulations are prepared with the polyurethanes having pendant epoxy groups and a multifunctional amine curing agent and, optionally, catalysts, solvents, additives, pigments.

Suitable amine curing agents are those which are soluble or miscible in a coating composition of the invention. Amine curing agents known in the art include, for example, diethylenetriamine, triethylenetetramine, tetraethylene-pentamine, etc. as well as 2,2,4- and/or 2,4,4-trimethylhexamethylenediamine; 1,2- and 1,3-diaminopropane; 2,2-dimethylpropylenediamine; 1,4-diaminobutane; 1,6-hexanediamine; 1,7-diaminoheptane; 1,8-diaminooctane; 1,9-diaminononae; 1,12-diaminododecane; 4-azaheptamethylenediamine; N,N'-bis(3-aminopropyl)butane-1,4-diamine; 1-ethyl-1,3-propanediamine; 2,2(4),4-trimethyl-1,6-hexanediamin; bis(3-aminopropyl)piperazine; N-aminoethylpiperazine; N,N-bis(3-aminopropyl)ethylenediamine; 2,4(6)-toluenediamine; dicyandiamine; melamine formaldehyde; tetraethylenepentamine; 3-diethylaminopropylamine; 3,3'-iminobispropylamine; tetraethylenepentamine; 3-diethylaminopropylamine; and 2,2,4- and 2,4,4-trimethylhexamethylenediamine. Exemplary cycloaliphatic amine curing agents include, but are not limited to, 1,2- and 1,3-diaminocyclohexane; 1,4-diamino-2,5-diethylcyclohexane; 1,4-diamino-3,6-diethylcyclohexane; 1,2-diamino-4-ethylcyclohexane; 1,4-diamino-2,5-diethylcyclo-hexane; 1,2-diamino-4-cyclohexylcyclohexane; isophorone-diamine; norbornanediamine; 4,4'-diaminodicyclohexylmethane; 4,4'-diaminodicyclohexylethane; 4,4'-diaminodicyclohexylpropane; 2,2-bis(4-aminocyclohexyl)propane; 3,3'-dimethyl-4,4'-diaminodicyclohexylmethane; 3-amino-1-(4-aminocyclohexyl)propane; 1,3- and 1,4-bis(aminomethyl)cyclohexane; and 1-cyclohexyl-3,4-dimino-cyelohexane. As exemplary araliphatic amines, in particular those amines are employed in which the amino groups are present on the aliphatic radical for example m- and p-xylylenediamine or their hydrogenation products as well as diamide diphenylmethane; diamide diphenylsulfonic acid (amine adduct); 4,4'-methylenedianiline; 2,4-bis(p-aminobenzyl)aniline; diethyltoluenediamine; and m-phenylene diamine. The amine curing agents may be used alone or as mixtures.

Suitable amine-epoxide adducts are, for example, reaction products of diamines such as, for example, ethylenediamine, diethylenetriamine, triethylenetetramine, m-xylylenediamine and/or bis(aminomethyl)cyclohexane with terminal epoxides such as, for example, polyglycidyl ethers of polyhydric phenols listed above.

Preferably, amine curing agents used with the coating formulations of the invention are PACM (bis(para-aminocyclohexyl)methane), diethylene triamine (DETA), and 4,4'-methylene dianiline (MDA). Stoichiometry ratios of amine to oxirane of the coating compositions may be based on amine hydrogen equivalent weight (AHEW) and on weight per epoxide (WPE). A formulation of 1:1 was based on one epoxide reacted with one amine active hydrogen.

In various embodiments, the compositions of the present invention may be used to provide coatings, adhesives, sealants, films, elastomers, castings, foams, and composites. Curing of the coatings, adhesives, sealants, films, elastomers, castings, foams, and composites of the invention may be carried out at ambient conditions or at elevated temperatures with a multifunctional amine curing agent or a curing agent reactive towards epoxy and, optionally, catalysts, solvents, additives, and pigments.

Solvents can be used in the formulation of the thermosets. Suitable solvents can include toluene, xylenes, n-butyl acetate, t-butyl acetate, amyl acetate, acetone, methyl ethyl ketone, methyl amyl ketone, dihydrolevoglucosenone (CYRENE), N-methyl 2-pyrrolidone, N-ethyl-2-pyrrolidone, ethyl ethoxy propionate, tetrahydrofuran, diethyl ether, dimethylsulfoxide, dimethyl formamide, and dimethylacetamide.

A coating composition of the invention may further contain at least one coating additive to, for example, enhance the composition's coating efficiency. Examples of suitable coating additives include, but are not limited to, leveling and flow control agents such as silicones, fluorocarbons or cellulosics; extenders, plasticizers, matting agents, pigment wetting and dispersing agents, ultraviolet (UV) absorbers, UV light stabilizers, defoaming and antifoaming agents, anti-settling, anti-sag and bodying agents, anti-skinning agents, anti-flooding and anti-floating agents, and corrosion inhibitors. Specific examples of such additives can be found in Raw Materials Index, published by the National Paint & Coatings Association, 1500 Rhode Island Avenue, N.W., Washington, D.C. 20005. Further examples of such additives may be found in U.S. Pat. No. 5,371,148.

Examples of matting agents include, but are not limited to, synthetic silica, available from the Davison Chemical Division of W. R. Grace & Company as SYLOID; polypropylene, available from Hercules Inc., as HERCOFLAT; synthetic silicate, available from J. M. Huber Corporation, as ZEOLEX.

Examples of viscosity, suspension, and flow control agents include, but are not limited to, polyaminoamide phosphate, high molecular weight carboxylic acid salts of polyamine amides, and alkylene amine salts of an unsaturated fatty acid, all available from BYK Chemie U.S.A. as ANTI TERRA. Further examples include, but are not limited to, polysiloxane copolymers, polyacrylate solution, cellulose esters, hydroxyethyl cellulose, hydroxypropyl cellulose, polyamide wax, polyolefin wax, hydroxypropyl methyl cellulose, polyethylene oxide, and the like.

Where formulated as a coating, the inventive compositions may be applied to various substrates including, but not limited to, metals (e.g. aluminum, steel), plastics, ceramics, glass, natural materials, and concrete. The substrates may optionally be cleaned prior to coating to remove processing oils or other contaminants. The substrates may also be pretreated to improve adhesion and corrosion resistance. Additionally, a primer may be applied first to the substrate followed by application of the coating of the invention. Alternatively, the coating of the invention can be applied to the substrate first, followed by a topcoat of another or similar material.

The compositions of the invention may be contacted with a substrate by any methods known to those skilled in the art, including but not limited to, spraying, dipping, flow coating, rolling, brushing, pouring, squeegeeing, and the like. In some embodiments, the inventive compositions may be applied in the form of paints or lacquers onto any compatible substrate. In certain embodiments, the inventive composition is applied as a single layer. In other embodiments, the composition of the present invention may be applied as multiple layers as needed.

### EXAMPLES

The non-limiting and non-exhaustive examples that follow are intended to further describe various non-limiting and non-exhaustive embodiments without restricting the scope of the embodiments described in this specification. Although described herein in the context of a coating, those skilled in the art will recognize that the principles of the present invention are equally applicable to adhesives, sealants, films, elastomers, castings, foams, and composites. All quantities given in "parts" and "percents" are understood to be by weight, unless otherwise indicated. For the purpose of mass to mole conversions, reagents with purity of 99% or higher are considered to be 100% pure.
- POLYISO A: an aliphatic isocyanate based on hexamethylene diisocyanate (HDI), commercially available from Covestro LLC (Pittsburgh, PA) as DESMODUR H (49.7% NCO);
- ALLYL ALCOHOL A: commercially available from Sigma-Aldrich;
- ALLYL ETHER A: trimethylolpropane diallyl ether, commercially available from Perstorp Holding AB, Sweden as TMPDE 90;
- CATALYST A: dibutyltin dilaurate 95% (DBTDL), one drop is ~ 20-30 mg, commercially available from Sigma-Aldrich;
- OXIDANT A: potassium peroxysulfate (OXONE), commercially available from Alfa Aesar;
- BASE A: sodium hydrogen carbonate, commercially available from Alfa Aesar;
- SOLVENT A: acetone, commercially available from Alfa Aesar;
- SOLVENT B: dichloromethane, commercially available from Alfa Aesar;
- SOLVENT C: ethyl acetate, commercially available from Alfa Aesar;
- SOLVENT D: ethylene glycol butyl ether, commercially available from Eastman Chemical Company;
- CROSSLINKER A: para-aminocyclohexyl methane (PACM), commercially available from Evonik;
- DI water: de-ionized water;
- MEK: methyl ethyl ketone, commercially available from VWR International; and
- BRINE: saturated aqueous solution of NaCl, prepared by dissolving 500 g NaCl (certified ACS, Sigma-Aldrich) into 1 L of DI water at room temperature.

The following methods were used for the characterization of the compounds synthesized and materials prepared in the examples. FTIR measurements were done by a THERMO NICOLET 8700 FTIR spectrometer. Spectra acquisitions were based on 64 scans with data spacing of 4.0 cm⁻¹ in the range of 4000-500 cm⁻¹. NMR measurements were done at 25 °C using BRUKER AVANCE 400 MHz instrument and processed with TOPSPIN software. All measurements were made using CDCl₃ as solvent. The bulk viscosity of samples was measured using an ARES Rheometer at room temperature. Epoxide equivalent weight (EEW, g/eq) of the epoxy products was determined by epoxy titration according to ASTM D1652-11 (2019). The number average molecular weight (Mₙ) and weight average molecular weight (M_{w}) were determined by GPC.

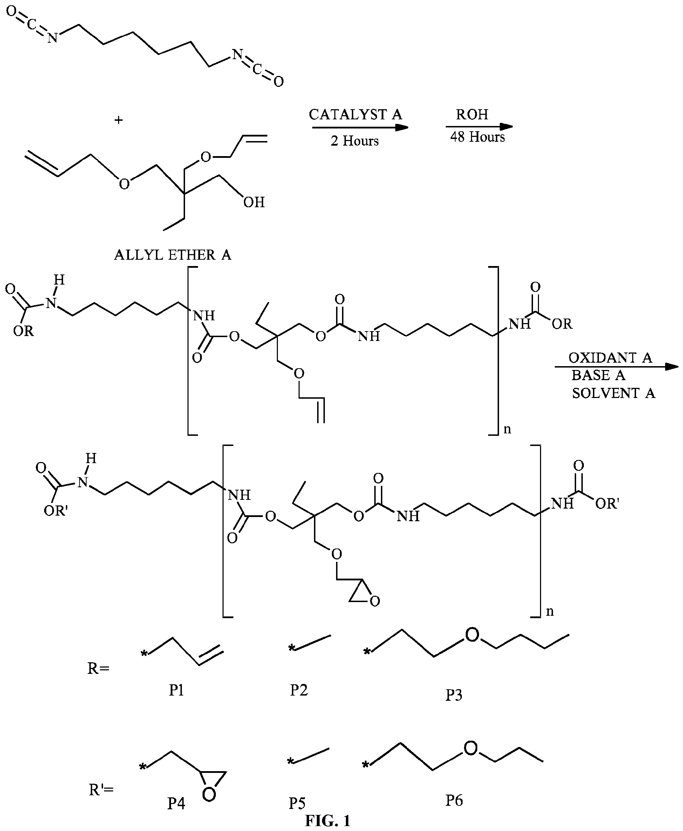

### Ex. 1 - Synthesis of polyurethane EPOXY RESIN P4 (FIG. 1)

### Step one: synthesis of POLYISO A-ALLYL ETHER A linear polymer P1

POLYISO A (33.8g 0.2 mol) and ALLYL ETHER A (26.3g, 0.15 mol) were added into a 500 mL three-neck round bottom flask equipped with a mechanical stirring apparatus, and CATALYST A (3 mg, 2 mmol) was added. The reaction mixture was stirred for about 2 hours and ALLYL ALCOHOL (5.8 g, 0.1 mol) was added into the reaction mixture. SOLVENT B was added into reaction mixture to maintain stirring during polymerization. Infrared spectroscopic analysis was performed to determine reaction completion by monitoring the disappearance of isocyanate peak at 2275 cm⁻¹. The resulting POLYISO A-ALLYL ETHER A linear polymer P1was directly and immediately used for the next step without purification.

¹H NMR (400 MHz) δ 5.96 - 5.62 (m), 5.19 - 4.82 (m), 4.44 (d, J = 5.2 Hz), 4.03 - 3.75 (m), 3.18 (s), 3.12 - 2.83 (m), 1.63 - 1.03 (m), 0.76 (t, J = 7.0 Hz).

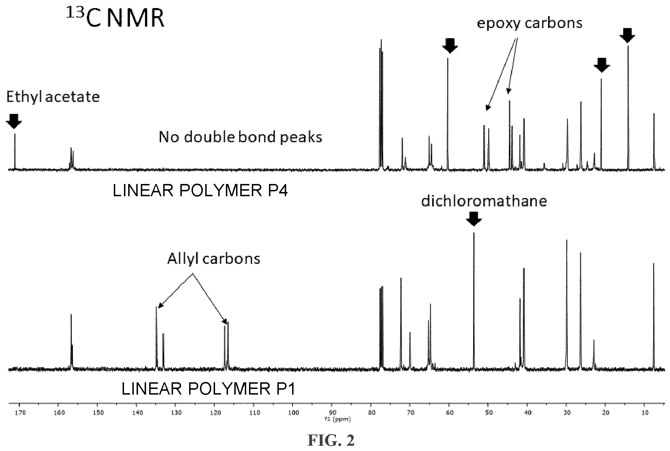

¹³C NMR (400 MHz) δ 156.68, 156.44, 134.90, 133.12, 117.41, 116.48, 72.29, 69.94, 65.33, 64.75, 41.80, 40.81, 29.85, 26.28, 22.85, 7.55. (FIG. 2)

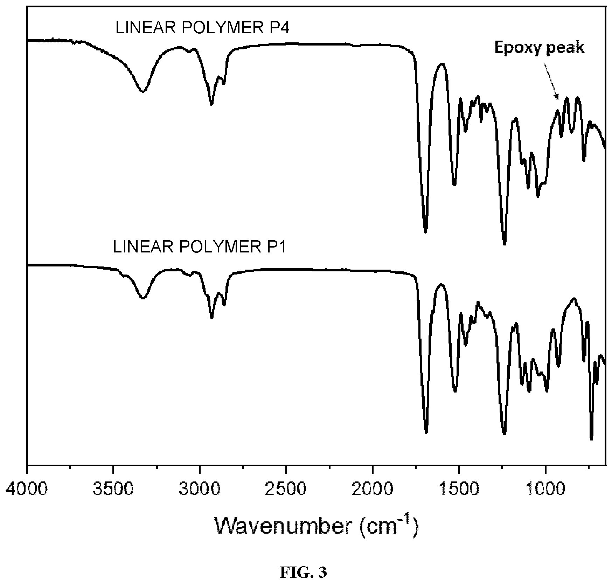

ATR-FTIR (cm⁻¹): 3326, 3063, 2932, 2859, 1691, 1521, 1462, 1238, 1135, 1094, 992, 925, 776,734, 702. (FIG. 3)

### Step two: synthesis of POLYISO A-ALLYL ETHER A linear polymer P4

The resulting POLYISO A-ALLYL ETHER A linear polymer P1 (containing about 0.217mol double bond), SOLVENT A (300mL), and BASE A (111 g, 6 equivalents, 1.32 mol) were added into a 2L three-neck, round bottom flask equipped with a mechanical stirring apparatus at once. An aqueous solution (1.1 L) of OXIDANT A (267 g, 4 equivalents, 0.868 mol) was added dropwise at a flowrate of 1-2 mL min⁻¹ using a pump at room temperature. After dropwise addition, the reaction solution was stirred at room temperature for another two hours. The reaction mixture was liquid-liquid extracted with SOLVENT C (3 x 150 mL). The organic layer was separated and washed with saturated brine solution (3 x 100 mL), and the solvent removed by evaporation. The carbon-carbon double bond conversion was about 95% (analyzed by ¹³C NMR spectroscopy, FIG. 2) and the yield was about 90%. The viscosity of the resulting POLYISO A-EPOXY RESIN was 323,269 mPa·s with Mₙ = 1244 Da, M_{w} = 2505 Da, and an epoxy equivalent weight of about 355.6 g/eq.

¹H NMR (400 MHz) δ 4.34 - 4.18 (m), 3.81 (s), 3.73 - 3.47 (m), 3.35 - 3.08 (m), 3.08 - 2.83 (m), 2.63 (dt, J = 22.6, 4.4 Hz), 2.54 - 2.35 (m), 1.44 - 1.11 (m), 0.70 (d, J = 6.2 Hz).

¹³C NMR (400 MHz) δ 157.12, 156.70, 156.25, 71.93, 71.08, 65.11, 64.47, 50.96, 49.87, 44.46, 43.85, 41.85, 40.77, 29.67, 26.19, 22.70, 7.47. (*see* FIG. 2)

ATR-FTIR (cm⁻¹): 3329, 2933, 2861, 1694, 1527, 1463, 1373, 1338, 1237, 1099, 1043, 907, 848, 776. (FIG. 3)

### Ex. 2 - Synthesis of polyurethane EPOXY RESIN (FIG. 1)

### Step one: Synthesis of POLYISO A-ALLYL ETHER A linear polymer P2

POLYISO A (30 g 0.178 mol) and ALLYL ETHER A (23.3 g, 0.134 mol) were added into a 500mL, three-neck, round bottom flask equipped with a mechanical stirring apparatus, CATALYST A (7.8 mg) was added. The reaction mixture was stirred for about two hours. dry SOLVENT E (2.8382 g, 0.0876 mol) was added into the reaction mixture. Dichloromethane was added into reaction mixture to maintain stirring during polymerization. Infrared spectroscopic analysis was performed to determine reaction completion by monitoring the disappearance of isocyanate peak at 2275 cm⁻¹. The resulting POLYISO A-ALLYL ETHER A linear polymer P2 was directly and immediately used for next step without purification.

¹H NMR (400 MHz) δ 5.73 (ddd, J = 22.4, 10.5, 5.4 Hz), 5.12 (d, J = 16.8 Hz), 5.02 (d, J = 10.1 Hz), 3.87 (s), 3.80 (d, J = 4.6 Hz), 3.52 (s), 3.17 (s), 3.01 (s), 1.49 - 1.27 (m), 1.21 (s), 0.75 (d, J = 6.2 Hz).

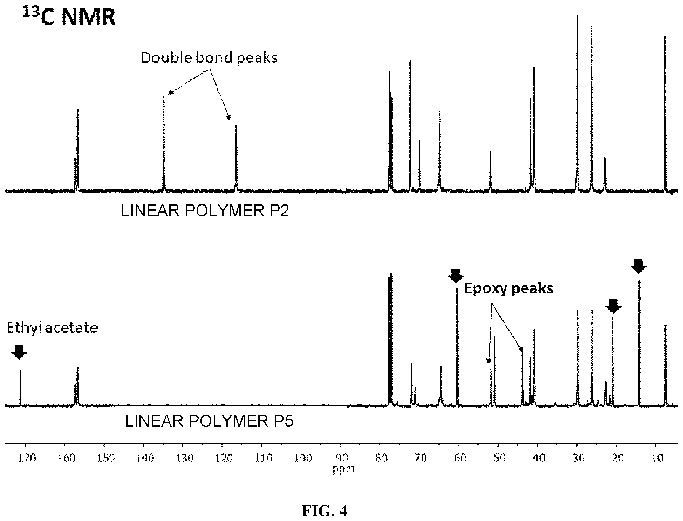

¹³C NMR (400 MHz) δ 157.28, 156.69, 134.87, 116.49, 72.27, 69.92, 64.74, 51.91, 41.78, 40.80, 29.85, 26.27, 22.83, 7.55. (FIG. 4)

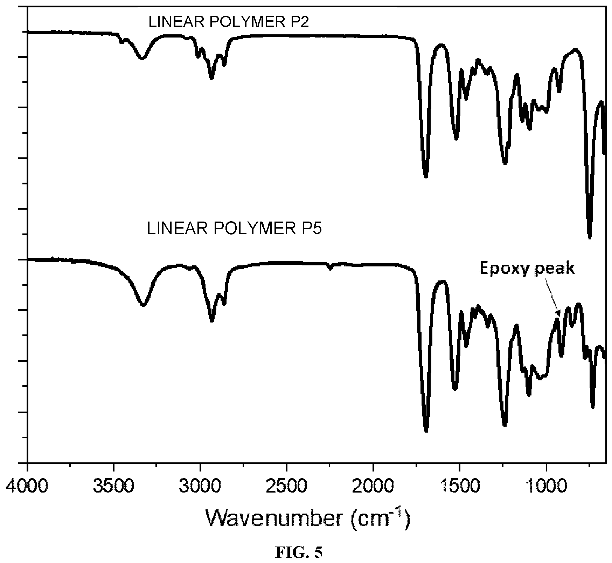

ATR-FTIR (cm⁻¹): 3334, 3011, 2934, 2859, 1694, 1519, 1463, 1237, 1136, 1095, 998, 926, 748, 665. (FIG. 5)

### Step two: Synthesis of POLYISO A-ALLYL ETHER A linear polymer P5

The resulting POLYISO A-ALLYL ETHER A linear polymer P2 (containing about 0.1338 mol double bond), SOLVENT A (300 mL), and BASE A (68 g 6 equiv, 0.803 mol) were added into a 2L three-neck, round bottom flask equipped with a mechanical stirring apparatus at once. An aqueous solution (0.9 L) which contained OXIDANT A (165 g, 4 equiv, 0.535 mol) was added dropwise at a flowrate of 1-2 mL min⁻¹ using a pump at room temperature. After dropwise addition, the reaction solution was stirred at room temperature for another two hours. The reaction mixture was liquid-liquid extracted with SOLVENT C (3 x 150 mL). The organic layer was separated and washed with BRINE (3 X 100 mL), and evaporated. The carbon-carbon double bond conversion was about 95% (analyzed by ¹³C NMR spectroscopy, FIG. 4) and the yield was about 90%. The resulting resin had Mₙ = 884 Da, M_{w} = 1439 Da, and an epoxy equivalent weight of about 568 g/eq.

¹H NMR (400 MHz) δ 5.24 (s), 3.80 (s), 3.62 - 3.50 (m), 3.46 (s), 3.24 (d, J = 9.3 Hz), 3.15 (dd, J = 11.7, 5.4 Hz), 2.95 (d, J = 2.8 Hz), 2.60 (t, J = 4.5 Hz), 2.41 (dd, J = 4.7, 2.6 Hz), 1.32 (s), 1.21 - 1.11 (m), 0.70 (d, J = 6.5 Hz).

¹³C NMR (400 MHz) δ 157.27, 156.69, 71.93, 71.10, 64.48, 51.81, 50.95, 43.85, 41.84, 40.74, 29.74, 26.20, 22.69, 7.46. (FIG. 4)

ATR-FTIR (cm⁻¹): 3327, 2932, 2861, 1692, 1527, 1462, 1411, 1338, 1239, 1099, 1040, 912, 850, 776, 729 (FIG. 5)

### Ex. 3 - Synthesis of polyurethane EPOXY RESIN (FIG. 1)

### Step one: Synthesis of POLYISO A-ALLYL ETHER A linear polymer P3

POLYISO A (30 g 0.178 mol) and ALLYL ETHER A (23.41 g, 0.134 mol) were added into a 500 mL three-neck round bottom flask equipped with a mechanical stirring apparatus, CATALYST A (9 mg) was added. The reaction mixture was stirred for about two hours. SOLVENT D (10.539 g, 0.0891 mol) was added into the reaction mixture and SOLVENT B was added into reaction mixture to maintain stirring during polymerization. Infrared spectroscopic analysis was performed to determine reaction completion by monitoring the disappearance of isocyanate peak at 2275 cm⁻¹. The resulting POLYISO A-ALLYL ETHER A linear polymer P3 was directly and immediately used for next step without purification.

¹H NMR (400 MHz) δ 5.72 (ddd, J = 22.4, 10.6, 5.4 Hz), 5.11 (d, J = 17.2 Hz), 5.01 (d, J = 10.2 Hz), 4.15 - 4.00 (m), 3.97 - 3.73 (m), 3.46 (dd, J = 15.1, 10.6 Hz), 3.41 - 3.27 (m), 3.16 (s), 3.08 - 2.88 (m), 1.57 - 1.05 (m), 0.76 (dt, J = 20.4, 7.1 Hz).

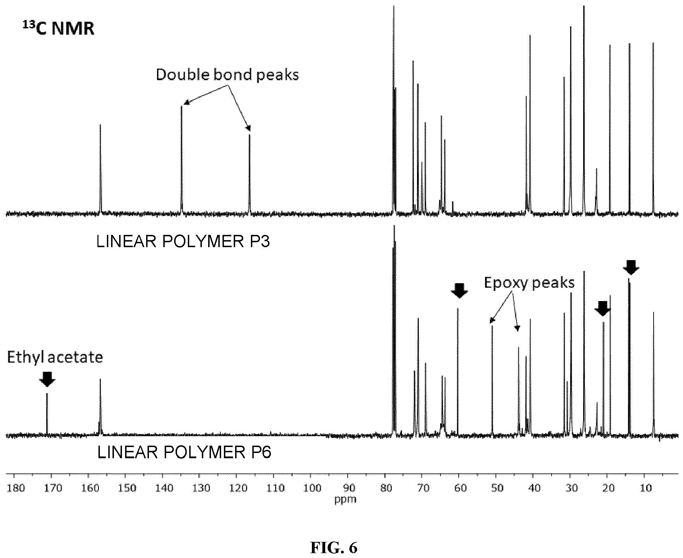

¹³C NMR (400 MHz) δ 156.67, 156.55, 134.86, 116.46, 72.26, 71.03, 69.92, 69.01, 64.71, 63.83, 41.78, 40.79, 31.62, 29.83, 26.29, 22.82, 19.21, 13.92, 7.55. (FIG. 6)

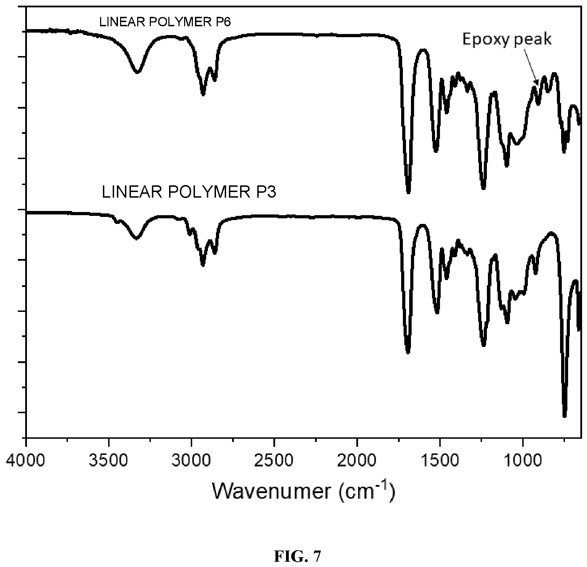

ATR-FTIR (cm⁻¹): 3334, 2933, 2861, 1696, 1519, 1462, 1412, 1237, 1096, 1047, 926, 749, 665. (FIG. 7)

### Step two: Synthesis of POLYISO A-ALLYL ETHER A linear polymer P6

The resulting POLYISO A-ALLYL ETHER A linear polymer P3 (containing about 0.217 mol double bond), SOLVENT A (250 mL), and BASE A (111 g, 6 equiv, 1.32mol) were added into a 2L, three-neck, round bottom flask equipped with a mechanical stirring apparatus at once. An aqueous solution (1.1 L) which contained OXIDANT A (267g, 4 equiv., 0.868 mol) was added dropwise at a flowrate of 1-2 mL min⁻¹ using a pump at room temperature. After dropwise addition, the reaction solution was stirred at room temperature for another two hours. The reaction mixture was liquid-liquid extracted with SOLVENT C (3 X 150 mL). The organic layer was separated and washed with BRINE (3 X 100 mL) and evaporated. The carbon-carbon double bond conversion was about 95% (analyzed by ¹³C NMR spectroscopy, FIG. 6) and the yield was about 90%. The viscosity of the resulting HDI TMPME epoxy resin was 323,269 mPa·s, with Mₙ = 970 Da, M_{w} = 1661 Da, and an epoxy equivalent of about 662 g/eq.

¹H NMR (400 MHz) δ 5.22 (s), 4.06 - 3.96 (m), 3.79 (s), 3.53 (d, J = 11.7 Hz), 3.48 - 3.37 (m), 3.32 - 3.20 (m), 3.14 (dd, J = 11.6, 5.4 Hz), 2.94 (d, J = 4.6 Hz), 2.58 (t, J = 4.5 Hz), 2.40 (dd, J = 4.8, 2.6 Hz), 1.99 (s), 1.85 (s), 1.42 - 1.25 (m), 1.24 - 1.10 (m), 0.80 - 0.60 (m).

¹³C NMR (400 MHz) δ 156.67, 71.92, 71.08, 70.93, 68.94, 64.45, 63.73, 50.93, 43.83, 41.84, 40.72, 31.55, 30.82, 29.73, 26.22, 22.69, 19.14, 13.84, 7.46. (FIG. 6)

ATR-FTIR (cm⁻¹): 3327, 2932, 2862, 1693, 1527, 1462, 1411, 1337, 1238, 1099, 1041, 910, 850, 753, 731. (FIG. 7

### Coating preparation and evaluation

Impact tests were measured according to ASTM D2794-93 (2019) using a BYK-Gardner Heavy Duty Impact Tester Model IG-1120, with a 1.8 kg (4 lb.) mass and 1.27 cm (0.5 in.) diameter round-nose punch. Methyl ethyl ketone (MEK) double rubs of the cured films was done in accordance with ASTM D5402-19. Coatings that passed 400 double rubs without mar were considered fully cured. Film thickness was measured with a BYKO-TEST 8500. Konig pendulum hardness and pencil hardness were measured using ASTM D4366-16 (2021) and ASTM D3363-20, respectively. The adhesion of coatings on steel substrate was evaluated using crosshatch adhesion ASTM D3359-17.

EPOXY RESIN P4 from Ex. 1 was mixed with CROSSLINKER A (the ratios of epoxy group and NH group are given in Table I) with SOLVENT D. The resulting coating formulations were applied onto iron phosphate pretreated 22-gauge steel test panels purchased from Q-panel. Coating application was made using a drawdown bar for a final dry film thickness of approximately 80 µm. Coated panels were cured at 80 °C for 45minutes. Table I summarizes the coatings properties of EPOXY-FUNCTIONAL POLYURETHANE P4 cured with PACM.

**Table I**

| | **Ratio of epoxy and NH groups** | | | |
|---|---|---|---|---|
| | **1:1** | | **1:2** | |
| **Test** | **RT** | **HT** | **RT** | **HT** |
| Pencil hardness | F | H | B | H |
| Crosshatch | 5B | 5B | 5B | 5B |
| Thickness (µm) | 49 | 50 | 42 | 48 |
| MEK | 215 | 200 | 200 | 55 |
| König Hardness (s) | 61 | 71 | 75 | 155 |
| Impact (inch-lb) | 172 | 172 | 172 | 172 |

| | | | | |
|---|---|---|---|---|
| RT = room temperature HT = 80 °C for 45 minutes | | | | |

EPOXY RESIN P5 from Ex. 2 was mixed with CROSSLINKER A (the ratios of epoxy group and NH group are as given in Table II) without any solvent. The coating formulations were applied onto iron phosphate pretreated 22-gauge steel test panels purchased from Q-panel. Coating application was made using a drawdown bar for a final dry film thickness of approximately 80 µm. Coated panels were cured at 80 °C for 45minutes. The coatings properties of EPOXY-FUNCTIONAL POLYURETHANE P5 cured with CROSSLINKER A are summarized in Table II.

**Table II**

| | **Ratio of epoxy and NH groups** | | | |
|---|---|---|---|---|
| | **1:1** | | **1:2** | |
| **Test** | **RT** | **HT** | **RT** | **HT** |
| Pencil hardness | 3B | HB | 3B | F |
| Crosshatch | 5B | 5B | 5B | 5B |
| Thickness (µm) | 62 | 79 | 63 | 70 |
| MEK | 10 | 10 | 35 | 65 |
| König Hardness (s) | 18 | 75 | 107 | 33 |
| Impact (inch-lb) | 172 | 0 | 172 | 0 |

| | | | | |
|---|---|---|---|---|
| RT = room temperature HT = 80 °C for 45 minutes | | | | |

EPOXY RESIN P6 from Example 3 was mixed with CROSSLINKER A (the ratios of epoxy group and NH group are as given in Table III) without any solvent. The coating formulations were applied onto iron phosphate pretreated 22-gauge steel test panels purchased from Q-panel. Coating application was made using a drawdown bar for a final dry film thickness of approximately 80 µm. Coated panels were then cured at 80 °C for 45 min. The coatings properties of EPOXY-FUNCTIONAL POLYURETHANE P6 cured with CROSSLINKER A are summarized in Table III.

**Table III**

| | **Ratio of epoxy and NH groups** | | | |
|---|---|---|---|---|
| | **1:1** | | **1:2** | |
| **Test** | **RT** | **HT** | **RT** | **HT** |
| Pencil hardness | 4B | B | 3B | F |
| Crosshatch | 5B | 5B | 5B | 5B |
| Thickness (µm) | 51 | 57 | 55 | 57 |
| MEK | 10 | 5 | 10 | 20 |
| Konig Hardness (s) | 23 | 58 | 35 | 121 |
| Impact (inch-lb) | 172 | 172 | 172 | 172 |

| | | | | |
|---|---|---|---|---|
| RT = room temperature HT = 80 °C for 45 minutes | | | | |

This specification has been written with reference to various non-limiting and non-exhaustive embodiments. However, it will be recognized by persons having ordinary skill in the art that various substitutions, modifications, or combinations of any of the disclosed embodiments (or portions thereof) may be made within the scope of this specification. Thus, it is contemplated and understood that this specification supports additional embodiments not expressly set forth herein. Such embodiments may be obtained, for example, by combining, modifying, or reorganizing any of the disclosed steps, components, elements, features, aspects, characteristics, limitations, and the like, of the various non-limiting embodiments described in this specification. In this manner, Applicant reserves the right to amend the claims during prosecution to add features as variously described in this specification, and such amendments comply with the requirements of 35 U.S.C. §112(a), and 35 U.S.C. §132(a).

Various aspects of the subject matter described herein are set out in the following numbered clauses:
Clause 1. A polyurethane with pendant epoxy groups according to formula (I): 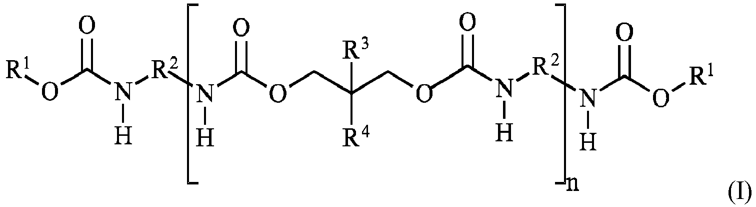 wherein, R¹ is a linear or branched alkyl group, an allyl group, a glycidyl group, an aromatic group, a cycloaliphatic group, an alkyl-aromatic group, or mixtures thereof, R² is a linear aliphatic, a cycloaliphatic, an aromatic, or an alkyl aromatic group, R³ is a hydrogen, a methyl, an ethyl, or other higher alkyl, an allyl oxy, a glycidyl oxy, an allyl oxy methyl, or a glycidyl oxy methyl group, and R⁴ is an allyl oxy, a glycidyl oxy, an allyl oxy methyl, or a glycidyl oxy methyl group.
Clause 2. One of a coating, an adhesive, a sealant, a film, an elastomer, a casting, a foam, and a composite comprising the polyurethane according to Clause 1.
Clause 3. A coating comprising the polyurethane according to Clause 1.
Clause 4. A process for producing the polyurethane according to Clause 1, the process comprising (1) reacting a diisocyanate with a compound containing one or more allyl groups and two hydroxyl groups, to form a linear polyurethane having pendant allyl-functional groups; and (2) oxidizing the allyl groups to produce the polyurethane with pendant epoxy groups.
Clause 5. The process according to Clause 4, wherein the diisocyanate is selected from the group consisting of 1,4-tetramethylene diisocyanate, 1,6-hexamethylene diisocyanate (HDI), 2,2,4-trimethyl-1,6-hexamethylene diisocyanate, 2,4,4-trimethyl-1,6-hexamethylene diisocyanate,1,12-dodecamethylene diisocyanate, cyclohexane-1,3- and 1,4-diisocyanate, 1-isocyanato-2-isocyanato-methyl cyclopentane, 1-isocyanato-3,3,5-trimethyl-5-isocyanato-methylcyclohexane (IPDI), bis-(4-isocyanatocyclohexyl)methane (H₁₂MDI), 1,3- and 1,4-bis(isocyanatomethyl)-cyclohexane, bis-(4-isocyanato-3-methyl-cyclohexyl)-methane, α,α,α*'*,α*'*-tetramethyl-1,3- and 1,4-xylene diisocyanate, 1-isocyanato-1-methyl-4(3)-isocyanato-methyl cyclohexane, and 2,4- and 2,6-hexahydrotoluene diisocyanate, toluene diisocyanate (TDI), diphenylmethane diisocyanate (MDI), pentane diisocyanate (PDI), isomers, biurets, allophanates, uretdiones of any of these and combinations of any of these.
Clause 6. The process according to one of Clauses 4 and 5, wherein the compound containing one or more allyl groups and two hydroxyl groups is selected from the group consisting of trimethylolpropane monoallyl ether, trimethylolethane monoallyl ether, glycerol monoallyl ether, pentaerythritol diallyl ether, or mixtures thereof.
Clause 7. The process according to one of Clauses 4 and 5, wherein step (1) occurs in the presence of a catalyst selected from the group consisting of dibutyl tin dilaurate and dibutyl tin diacetate.
Clause 8. A process for producing one of a coating, an adhesive, a sealant, a film, an elastomer, a casting, a foam, and a composite, the process comprising reacting the polyurethane according to Clause 1 with an amine curing agent.
Clause 9. The process according to Clause 8, wherein the amine curing agent is selected from the group consisting of diethylenetriamine, triethylenetetramine, tetraethylenepentamine, 2,2,4- and/or 2,4,4-trimethylhexamethylenediamine, 1,2- and 1,3-diaminopropane, 2,2-dimethylpropylenediamine, 1,4-diaminobutane, 1,6-hexanediamine, 1,7-diaminoheptane, 1,8-diaminooctane, 1,9-diaminononae, 1,12-diaminododecane, 4-azaheptamethylenediamine, N,N*'*-bis(3-aminopropyl)butane-1,4-diamine, 1-ethyl-1,3-propanediamine, 2,2(4),4-trimethyl-1,6-hexanediamin, bis(3-aminopropyl)piperazine, N-aminoethylpiperazine, N,N-bis(3-aminopropyl)ethylenediamine, 2,4(6)-toluenediamine, dicyandiamine, melamine formaldehyde, tetraethylenepentamine, 3-diethylaminopropylamine, 3,3'-iminobispropylamine, tetraethylenepentamine, 3-diethylaminopropylamine, 2,2,4- and 2,4,4-trimethylhexamethylenediamine. 1,2- and 1,3-diaminocyclohexane, 1,4-diamino-2,5-diethylcyclohexane, 1,4-diamino-3,6-diethylcyclohexane, 1,2-diamino-4-ethylcyclohexane, 1,4-diamino-2,5-diethylcyclo-hexane, 1,2-diamino-4-cyclohexylcyclohexane, isophorone-diamine, norbornanediamine, 4,4'-diaminodicyclohexylmethane, 4,4'-diaminodicyclohexylethane, 4,4'-diaminodicyclohexylpropane, 2,2-bis(4-aminocyclohexyl)propane, 3,3'-dimethyl-4,4'-diaminodicyclohexylmethane, 3-amino-1-(4-aminocyclohexyl)propane, 1,3- and 1,4-bis(aminomethyl)cyclohexane, 1-cyclohexyl-3,4-dimino-cyelohexane, m- and p-xylylenediamine, diamide diphenylmethane, diamide diphenylsulfonic acid, 4,4"-methylenedianiline, 2,4-bis(p-aminobenzyl)aniline, diethyltoluenediamine, m-phenylene diamine, and mixtures of any of these.
Clause 10. The process according to Clause 8, wherein the amine curing agent is selected from the group consisting of PACM (bis(para-aminocyclohexyl)methane), diethylene triamine (DETA), and 4,4'-methylene dianiline (MDA).
Clause 11. A coating produced according the process of Clause 8.

## Claims

1. A polyurethane with pendant epoxy groups according to formula (I): 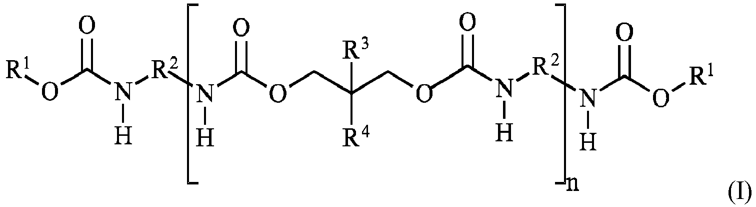 wherein,
R¹ is a linear or branched alkyl group, an allyl group, a glycidyl group, an aromatic group, a cycloaliphatic group, an alkyl-aromatic group, or mixtures thereof,
R² is a linear aliphatic, a cycloaliphatic, an aromatic, or an alkyl aromatic group,
R³ is a hydrogen, a methyl, an ethyl, or other higher alkyl, an allyl oxy, a glycidyl oxy, an allyl oxy methyl, or a glycidyl oxy methyl group, and
R⁴ is an allyl oxy, a glycidyl oxy, an allyl oxy methyl, or a glycidyl oxy methyl group.

2. One of a coating, an adhesive, a sealant, a film, an elastomer, a casting, a foam, and a composite comprising the polyurethane according to claim 1.

3. A coating comprising the polyurethane according to claim 1.

4. A process of producing the polyurethane according to claim 1, the process comprising:
(1) reacting a diisocyanate with a compound containing one or more allyl groups and two hydroxyl groups, to form a linear polyurethane having pendant allyl-functional groups; and
(2) oxidizing the allyl groups to produce the polyurethane with pendant epoxy groups.

5. The process according to claim 4, wherein the diisocyanate is selected from the group consisting of 1,4-tetramethylene diisocyanate, 1,6-hexamethylene diisocyanate, 2,2,4-trimethyl-1,6-hexamethylene diisocyanate, 2,4,4-trimethyl-1,6-hexamethylene diisocyanate, 1, 12-dodecamethylene diisocyanate, cyclohexane-1,3-diisocyanate, cyclohexane-1,4-diisocyanate, 1-isocyanato-2-isocyanato-methyl cyclopentane, 1-isocyanato-3,3,5-trimethyl-5-isocyanato-methylcyclohexane, bis-(4-isocyanatocyclohexyl)methane, 1,3-bis(isocyanatomethyl)-cyclohexane, 1,4-bis(isocyanatomethyl)-cyclohexane, bis-(4-isocyanato-3-methyl-cyclohexyl)-methane, α,α,α',α'-tetramethyl-1,3-xylene diisocyanate, α,α,α',α'-tetramethyl-1,4-xylene diisocyanate, 1-isocyanato-1-methyl-4(3)-isocyanato-methyl cyclohexane, and 2,4-hexahydrotoluene diisocyanate, 2,6-hexahydrotoluene diisocyanate, toluene diisocyanate, diphenylmethane diisocyanate, pentane diisocyanate, isomers, biurets, allophanates, and uretdiones of any of these, and combinations of any of these.

6. The process according to claim 4, wherein the compound containing one or more allyl groups and two hydroxyl groups is selected from the group consisting of trimethylolpropane monoallyl ether, trimethylolethane monoallyl ether, glycerol monoallyl ether, pentaerythritol diallyl ether.

7. A process of producing one of a coating, an adhesive, a sealant, a film, an elastomer, a casting, a foam, and a composite, the process comprising reacting the polyurethane according to claim 1 with an amine curing agent.

8. The process according to claim 7, wherein the amine curing agent is selected from the group consisting of diethylenetriamine, triethylenetetramine, tetraethylenepentamine, 2,2,4-trimethylhexamethylenediamine, 2,4,4-trimethylhexamethylenediamine, 1,2-diaminopropane, 1,3-diaminopropane, 2,2-dimethylpropylenediamine, 1,4-diaminobutane, 1,6-hexanediamine, 1,7-diaminoheptane, 1,8-diaminooctane, 1,9-diaminononae, 1,12-diaminododecane, 4-azaheptamethylenediamine, N,N'-bis(3-aminopropyl)butane-1,4-diamine, 1-ethyl-1,3-propanediamine, 2,2(4),4-trimethyl-1,6-hexanediamin, bis(3-aminopropyl)piperazine, N-aminoethylpiperazine, N,N-bis(3-aminopropyl)ethylenediamine, 2,4(6)-toluenediamine, dicyandiamine, melamine formaldehyde, tetraethylenepentamine, 3-diethylaminopropylamine, 3,3'-iminobispropylamine, tetraethylenepentamine, 3-diethylaminopropylamine, 2,2,4-trimethylhexamethylenediamine, 2,4,4-trimethylhexamethylenediamine. 1,2-diaminocyclohexane, 1,3-diaminocyclohexane, 1,4-diamino-2,5-diethylcyclohexane, 1,4-diamino-3,6-diethylcyclohexane, 1,2-diamino-4-ethylcyclohexane, 1,4-diamino-2,5-diethylcyclo-hexane, 1,2-diamino-4-cyclohexylcyclohexane, isophorone-diamine, norbornanediamine, 4,4'-diaminodicyclohexylmethane, 4,4'-diaminodicyclohexylethane, 4,4'-diaminodicyclohexylpropane, 2,2-bis(4-aminocyclohexyl)propane, 3,3'-dimethyl-4,4'-diaminodicyclohexylmethane, 3-amino-1-(4-aminocyclohexyl)propane, 1,3-bis(aminomethyl)cyclohexane, 1,4-bis(aminomethyl)cyclohexane, 1-cyclohexyl-3,4-diminocyelohexane, m-xylylenediamine, p-xylylenediamine, diamide diphenylmethane, diamide diphenylsulfonic acid, 4,4'-methylene dianiline, 2,4-bis(p-aminobenzyl)aniline, diethyltoluenediamine, m-phenylene diamine, and mixtures of any of these.

9. The process according to claim 7, wherein the amine curing agent is selected from the group consisting of bis(para-aminocyclohexyl)methane, diethylene triamine, and 4,4'-methylene dianiline.

10. A coating produced according to the process of claim 7.
